Europäisches Patentamt

European Patent Office

Office européen des brevets

(11) Publication number: **0 171 202**
**A2**

## (12) EUROPEAN PATENT APPLICATION

(21) Application number: **85304927.8**

(22) Date of filing: **10.07.85**

(51) Int. Cl.⁴: **H 04 N 5/33**

(30) Priority: **02.08.84 GB 8419776**

(43) Date of publication of application: **12.02.86**
**Bulletin 86/7**

(84) Designated Contracting States: **AT BE CH DE FR IT LI LU NL SE**

(71) Applicant: **STANDARD TELEPHONES AND CABLES PUBLIC LIMITED COMPANY, 190 Strand, London, WC2R 1DU (GB)**

(72) Inventor: **Ross, Peter William, 40 Rainsford Road, Stanstead Essex (GB)**

(74) Representative: **Capsey, Sydney Ross, Standard Telephones and Cables Patent Department Edinburgh Way, Harlow Essex CM20 2SH (GB)**

(54) **Thermal imager.**

(57) The display system of a thermal imager operating in chopped mode is provided by a matrix addressed crystal display cell which, without recourse to any special separate signal storage and signal processing stage, automatically performs frame-to-frame subtraction by virtue of its square law response.

EP 0 171 202 A2

0171202

P. W. Ross 15
Europe

THERMAL IMAGING SYSTEMS

This invention relates to thermal imaging systems.

In principle a video signal representative of a thermal image can be generated by scanning the thermal image across a single detector. Such an approach is however going to be very slow having regard to the response time of a typical detector. An alternative approach is to form the thermal image upon a two dimensional array of detectors. A direct connection may be made from each member of that array to the corresponding member of an array of pixels of a display device. Alternatively the outputs are read serially to form a video signal. Some detector signals, such as pyroelectric detectors, need to be operated in chopped mode, while in the case of other detectors the use of a chopped mode is not essential but improves sensitivity. In certain types of chopped mode operation the output takes the form of a video signal where alternate frames of the signal are produced when the detector system is exposed to the thermal image, while the intervening frames, which are of inverted form, are produced by relaxation effects when the thermal image is prevented by the chopper from reaching the detector system. A video signal of this form can be applied to a CRT display system after first inverting alternate frames. However, a better approach is often found to be provided by performing frame-to-frame subtraction because this will serve to remove certain forms of systematic error that are compounded by the alternate invertion approach because such operate in the same direction in consecutive frames. Frame-to-frame subtraction normally requires the use of a store for the storage of each successive frame in order to be able to compare it point-by-point with its . immediate successor. This invention is concerned with a display system for the thermal imager which will effectively perform frame-to-frame subtraction at the display itself, and thereby avoid having recourse to this storage requirement.

According to the present invention there is provided a thermal imager adapted to operate in chopped mode so as to produce a video signal output in which alternate frames are inverted with respect to the intervening frames, characterised in that the video output is applied to a matrix addressed liquid crystal display device capable of grey scale representation, which display device is adapted to perform frame-to-frame subtraction by virtue of its square law response to drive voltage across its pixels.

There follows a description of the thermal imaging system embodying the invention in a preferred form. The description refers to the accompanying drawings in which :-

Figure 1 depicts a schematic diagram of the thermal imaging system, and

Figure 2 is a schematic diagram illustrating the mode of operation of the VDU of Figure 1.

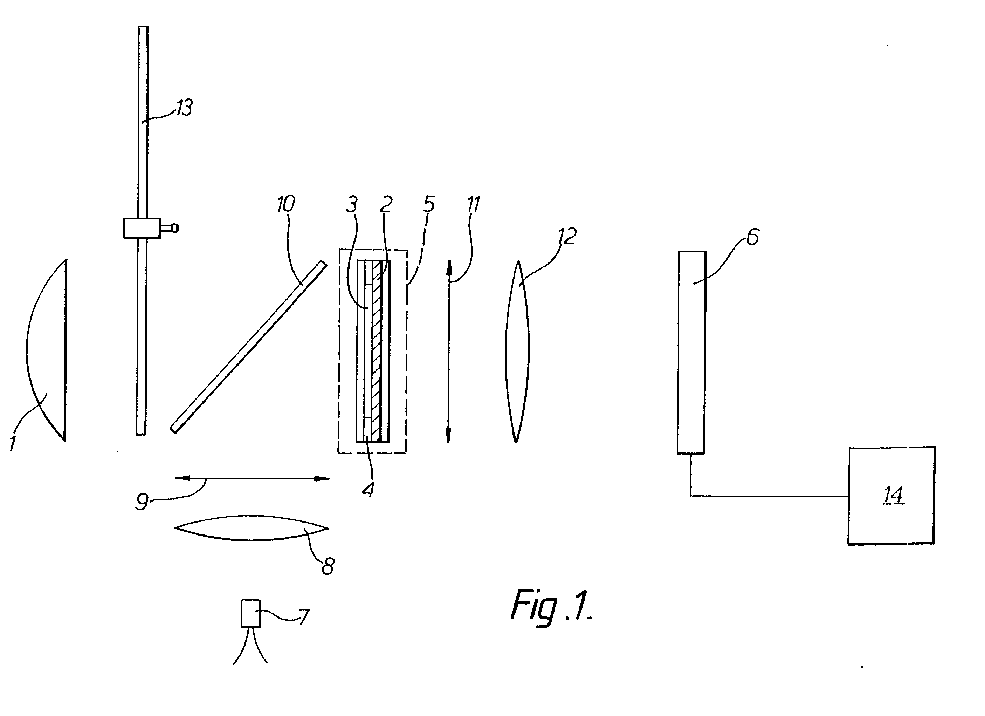

Referring to Figure 1 thermal radiation from a scene (not shown) is imaged by a far infra-red (typically about 10 microns) imaging optics 1 upon an absorbing layer 2 in contact with one surface of a liquid crystal layer 3 contained within a liquid crystal cell 4. The cell is contained within a thermostatically controlled chamber 5 and its construction is such as to minimise thermal spreading effects in the thermal image and also thermal mass.

The temperature of the chamber 5 is maintained at a suitable value so that the pattern of small temperature variations appearing over the area of the liquid crystal layer 3 that are created by the differential heating of the thermal image produces changes in alignment of the liquid crystal molecules. Since these molecules are optically anisotropic the thermal image has resulted in the production of a corresponding optical phase image in the liquid crystal layer. This phase image is in its turn used to generate an intensity contrast image at a conventional two-dimensional video image transducer 6 such as a CCD camera or Vidicon. For this purpose the liquid crystal layer 3 is illuminated with a near infra-red (typically with a wavelength of about 1 micron) source 7 such as an injection laser via a diffusing lens 8, a linear polariser 9 and a germanium mirror 10. The near infra-red light transmitted through the liquid crystal layer then passes through a linear polarisation analyser 11, and imaging optics 12 which forms an image of the layer 3 upon the transducer 6.

A chopper 13 periodically interrupts the far infra-red in synchronisation with the frame scan of the transducer 6. Hence alternate frames of the video output relate to when the liquid crystal layer is being heated by the far infra-red, while the intervening frames relate to when the layer is cooling by virtue of the fact that the far infra-red is obstructed by the chopper. Therefore, the video signal is not in a suitable form for direct application to a conventional CRT type VDU, but would first need processing in some form of frame store subtractor circuit. In this instance however, the signal output from the transducer 6 is instead fed direct to a liquid crystal type VDU 14.

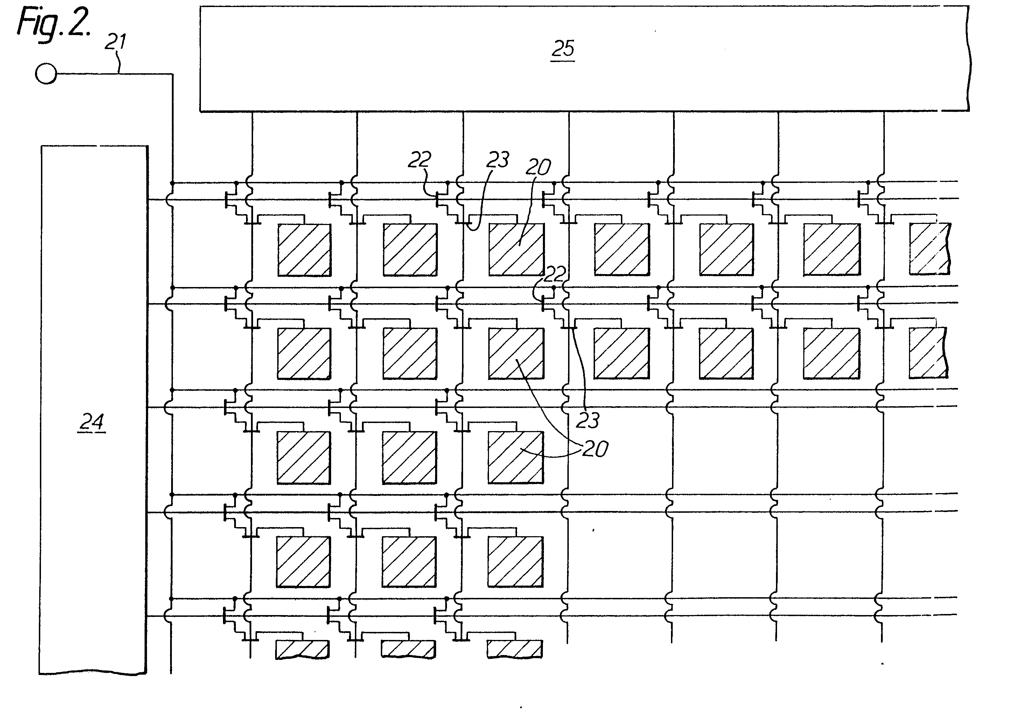

The VDU 14 is an active silicon matrix addressed device whose basic organisation is depicted in Figure 2.

The pixels of the VDU 14 are arranged in rows and columns, and each pixel is defined by the area of overlap between a rear electrode 20 behind the liquid crystal layer and the transparent front sheet electrode (not shown) in front of that layer. Each rear electrode is connected with a video signal input line 21, which is common to all rear electrodes, via an associated pair of gates 22 and 23 associated with that particular rear electrode. Gate 22 has to do with the row number of that electrode while gate 23 has to do with its column number. Operation of the gates is effected by control circuits 24 and 25. Control circuit 24 has one output line 26 associated with each row of pixel rear electrodes 20, and the gate electrodes of all their associated gates 22 are connected to this output line. Similarly control circuit 25 has one output line 27 associated each column of pixel rear electrodes, and the gate electrodes of their associated gates 23 are connected to this output line. Thus, by appropriate phasing of strobing signals applied to the control circuits 24 and 25, the appropriate parts of the video signal on line 21 are distributed to the appropriate pixel rear electrodes. The transparent front sheet electrode is maintained at a constant potential approximately midway between the levels of corresponding points of consecutive video frames. In this way the liquid crystal layer of the VDU is not exposed to any long term d.c. bias which could be responsible for engendering electrolytic degradation, and frame-to-frame subtraction is automatically effected without recourse to special frame storage measures.

CLAIM :

1.     A thermal imager adapted to operate in chopped mode so as to produce a video signal output in which the alternate frames are inverted with respect to the intervening frames, <u>characterised in that</u> the video output is applied to a matrix addressed liquid crystal display device capable of grey scale representation, which display device is adapted to perform frame-to-frame subtraction by virtue of its square law response to drive voltage across its pixels.

_Fig .1._

0171202

Fig.2.